# EUROPEAN PATENT APPLICATION

(11) **EP 4 593 448 A1**
(43) Date of publication of application: **30.07.2025**
(21) Application number: 25152915.2
(22) Date of filing: 20.01.2025
(51) Int. Cl.: H04W 24/02, H04L 41/0823, H04L 41/16, H04W 88/08, H04W 88/12, H04W 92/12

(54) **FEDERATED LEARNING WITH E2 NODE**

(30) Priority: 23.01.2024 FI 20245063
(71) Applicant: Nokia Solutions and Networks Oy, 02610 Espoo (FI)
(72) Inventor: RAMACHANDRAN, Srilatha, 560093 Bengaluru (IN); GOSHI, Ece, 80807 Munich (DE); URIE, Alistair, 92130 Issy les Moulineaux (FR); NANAVATY, Niraj, 560037 Bangalore (IN); GHAROUNI, Afsaneh, 81541 Munich (DE)
(74) Representative: DREISS Patentanwälte PartG mbB

(57) **Abstract**

Disclosed is a method comprising receiving, from one or more E2 nodes of a radio access network, an E2 setup request message indicating a capability of the one or more E2 nodes for operating as a federated learning client in a federated learning process; determining to initiate the federated learning process for the one or more E2 nodes that indicated the capability for operating as the federated learning client; and transmitting, to the one or more E2 nodes, an RIC control request message comprising an indication to initiate the federated learning process.

## Description

### TECHNICAL FIELD

The following example embodiments relate to wireless communication and to machine learning.

### BACKGROUND

Federated learning is a machine learning technique where models are trained at multiple decentralized hosts holding local data samples, without exchanging the actual data, thus preserving privacy.

### BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided an apparatus comprising at least one processor, and at least one memory storing instructions that, when executed by the at least one processor, cause the apparatus at least to: receive, from one or more E2 nodes of a radio access network, an E2 setup request message indicating a capability of the one or more E2 nodes for operating as a federated learning client in a federated learning process; determining to initiate the federated learning process for the one or more E2 nodes that indicated the capability for operating as the federated learning client; and transmit, to the one or more E2 nodes, an RIC control request message comprising an indication to initiate the federated learning process.

According to another aspect, there is provided an apparatus comprising: means for receiving, from one or more E2 nodes of a radio access network, an E2 setup request message indicating a capability of the one or more E2 nodes for operating as a federated learning client in a federated learning process; means for determining to initiate the federated learning process for the one or more E2 nodes that indicated the capability for operating as the federated learning client; and means for transmitting, to the one or more E2 nodes, an RIC control request message comprising an indication to initiate the federated learning process.

According to another aspect, there is provided a method comprising: receiving, from one or more E2 nodes of a radio access network, an E2 setup request message indicating a capability of the one or more E2 nodes for operating as a federated learning client in a federated learning process; determining to initiate the federated learning process for the one or more E2 nodes that indicated the capability for operating as the federated learning client; and transmitting, to the one or more E2 nodes, an RIC control request message comprising an indication to initiate the federated learning process.

According to another aspect, there is provided a computer program comprising instructions which, when executed by an apparatus, cause the apparatus to perform at least the following: receiving, from one or more E2 nodes of a radio access network, an E2 setup request message indicating a capability of the one or more E2 nodes for operating as a federated learning client in a federated learning process; determining to initiate the federated learning process for the one or more E2 nodes that indicated the capability for operating as the federated learning client; and transmitting, to the one or more E2 nodes, an RIC control request message comprising an indication to initiate the federated learning process.

According to another aspect, there is provided a computer readable medium comprising program instructions which, when executed by an apparatus, cause the apparatus to perform at least the following: receiving, from one or more E2 nodes of a radio access network, an E2 setup request message indicating a capability of the one or more E2 nodes for operating as a federated learning client in a federated learning process; determining to initiate the federated learning process for the one or more E2 nodes that indicated the capability for operating as the federated learning client; and transmitting, to the one or more E2 nodes, an RIC control request message comprising an indication to initiate the federated learning process.

According to another aspect, there is provided a non-transitory computer readable medium comprising program instructions which, when executed by an apparatus, cause the apparatus to perform at least the following: receiving, from one or more E2 nodes of a radio access network, an E2 setup request message indicating a capability of the one or more E2 nodes for operating as a federated learning client in a federated learning process; determining to initiate the federated learning process for the one or more E2 nodes that indicated the capability for operating as the federated learning client; and transmitting, to the one or more E2 nodes, an RIC control request message comprising an indication to initiate the federated learning process.

According to another aspect, there is provided an apparatus comprising at least one processor, and at least one memory storing instructions that, when executed by the at least one processor, cause the apparatus at least to: transmit, to a near-real-time radio access network intelligent controller, an E2 setup request message indicating a capability for operating as a federated learning client in a federated learning process; receive, from the near-real-time radio access network intelligent controller, an RIC control request message comprising an indication to initiate the federated learning process; and initiate the federated learning process based on receiving the RIC control request message.

According to another aspect, there is provided an apparatus comprising: means for transmitting, to a near-real-time radio access network intelligent controller, an E2 setup request message indicating a capability for operating as a federated learning client in a federated learning process; means for receiving, from the near-real-time radio access network intelligent controller, an RIC control request message comprising an indication to initiate the federated learning process; and means for initiating the federated learning process based on receiving the RIC control request message.

According to another aspect, there is provided a method comprising: transmitting, by an E2 node, to a near-real-time radio access network intelligent controller, an E2 setup request message indicating a capability for operating as a federated learning client in a federated learning process; receiving, by the E2 node, from the near-real-time radio access network intelligent controller, an RIC control request message comprising an indication to initiate the federated learning process; and initiating, by the E2 node, the federated learning process based on receiving the RIC control request message.

According to another aspect, there is provided a computer program comprising instructions which, when executed by an apparatus, cause the apparatus to perform at least the following: transmitting, to a near-real-time radio access network intelligent controller, an E2 setup request message indicating a capability for operating as a federated learning client in a federated learning process; receiving, from the near-real-time radio access network intelligent controller, an RIC control request message comprising an indication to initiate the federated learning process; and initiating the federated learning process based on receiving the RIC control request message.

According to another aspect, there is provided a computer readable medium comprising program instructions which, when executed by an apparatus, cause the apparatus to perform at least the following: transmitting, to a near-real-time radio access network intelligent controller, an E2 setup request message indicating a capability for operating as a federated learning client in a federated learning process; receiving, from the near-real-time radio access network intelligent controller, an RIC control request message comprising an indication to initiate the federated learning process; and initiating the federated learning process based on receiving the RIC control request message.

According to another aspect, there is provided a non-transitory computer readable medium comprising program instructions which, when executed by an apparatus, cause the apparatus to perform at least the following: transmitting, to a near-real-time radio access network intelligent controller, an E2 setup request message indicating a capability for operating as a federated learning client in a federated learning process; receiving, from the near-real-time radio access network intelligent controller, an RIC control request message comprising an indication to initiate the federated learning process; and initiating the federated learning process based on receiving the RIC control request message.

### LIST OF DRAWINGS

In the following, various example embodiments will be described in greater detail with reference to the accompanying drawings, in which
FIG. 1 illustrates an example of a wireless communication network;
FIG. 2 illustrates an example of a system;
FIG. 3 illustrates a signal flow diagram;
FIG. 4 illustrates a flow chart;
FIG. 5 illustrates a flow chart;
FIG. 6 illustrates an example of an apparatus; and
FIG. 7 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

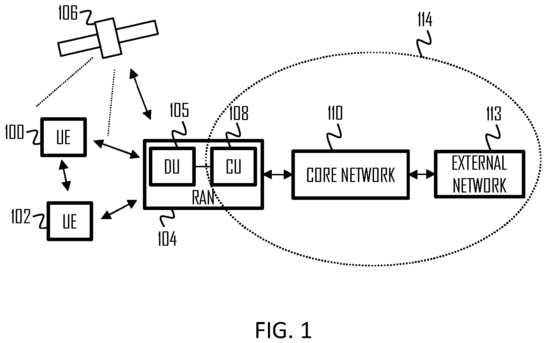

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, or a RAN node. In this description, the terms "access node" and "radio access network node" may be used interchangeably.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and receiving control plane signaling and also for routing data from one access node to another access node.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

5G may enable analytics and knowledge generation to occur at the source of the data. This approach may involve leveraging resources that may not be continuously connected to a network, such as laptops, smartphones, tablets and sensors. Multi-access edge computing (MEC) may provide a distributed computing environment for application and service hosting. It may also have the ability to store and process content in close proximity to cellular subscribers for faster response time. Edge computing may cover a wide range of technologies, such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

In one embodiment, an access node 104 may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, in particular mega-constellations (i.e., systems in which hundreds of (nano)satellites are deployed). A given satellite 106 in the mega-constellation may cover several satellite-enabled network entities that create on-ground cells. The on-ground cells may be created through an on-ground relay access node or by an access node located on-ground or in a satellite.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

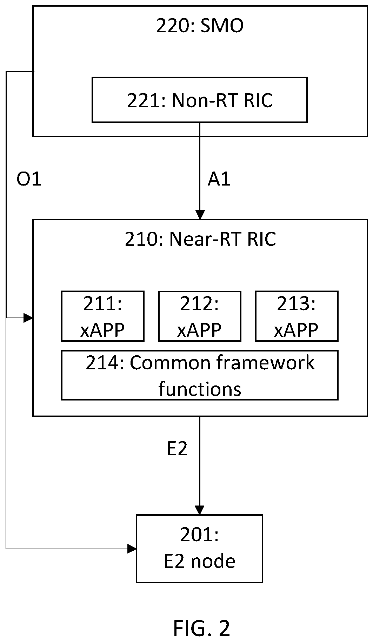

FIG. 2 illustrates an example of a system based on open radio access network (O-RAN) architecture.

The O-RAN architecture comprises two parts: 1) a split architecture part with 5G standalone architecture, each of which is called an E2 node 201, and 2) an automation part that comprises a near-real-time (near-RT) radio access network intelligent controller (RIC) 210 located within the radio access network, and a non-real-time (non-RT) RIC 221 located within a network management entity called service management and orchestration (SMO) 220.

The SMO 220 may be connected to the RAN network functions, including the near-RT RIC 210, via an 01 interface.

The non-RT RIC 221 (which resides in the SMO 220) performs non-real-time operations. The non-RT RIC 221 may communicate with the near-RT RIC 210 through the 01 and/or A1 interface. The non-RT RIC 221 may be used to control the near-RT RIC 210. For example, the non-RT RIC 221 may modify the near-RT RIC platform 210 and/or the internal applications 211, 212, 213 (xApps) of the near-RT RIC 210. Furthermore, the non-RT RIC 221 may monitor, analyze and provide feedback on the state of the near-RT RIC 210, provide enrichment information, and/or facilitate, train and distribute machine learning models for the previously mentioned tasks.

The near-RT RIC 210 may communicate with one or more E2 nodes 201 through the E2 interface for time-sensitive near-real-time management and control of radio resources, such as interference management, handover management, Quality of Service (QoS) management, and radio connection management.

An E2 node 201 may be defined as a logical node terminating the E2 interface interfacing with the near-RT RIC 210. An E2 node may comprise or execute one or more RAN functions. For example, an E2 node 201 may comprise at least one of: an O-RAN central unit control plane (O-CU-CP), an O-RAN central unit user plane (O-CU-UP), an O-RAN distributed unit (O-DU), and/or an O-RAN eNB (O-eNB). Although only one E2 node 201 is shown in FIG. 2, it should be noted there may also be more than one E2 node connected to the near-RT RIC 210.

The near-RT RIC 210 may host one or more xApps 211, 212, 213 and common framework platform functions 214 to support and be used by the xApps 211, 212, 213. Although three xApps 211, 212, 213 are shown in FIG. 2, it should be noted that the number of xApps 211, 212, 213 may also be different than three (i.e., there may be one or more xApps).

A given xAPP 211, 212, 213 may control some RAN function(s) or a part of it. The xApps 211, 212, 213 can also exchange information between them, enabling to build sophisticated use cases leveraging the capabilities of the multiple xApps. An xApp 211, 212, 213 may comprise a descriptor and a software package. The descriptor provides metadata on the xApp related to its version, provider, software package location, management information regarding fault, configuration, accounting, performance and security (FCAPS), and the data types that it takes as input as well as the data types that it produces as output. The software package implements the logic that collects RAN-related information coming from the E2 node(s) 201 and provides optimized and intelligent RAN control decisions.

As mentioned above, the near-RT RIC 210 supports and manages the xApps 211, 212, 213 by hosting common framework platform functions 214.

As an example, the common framework platform functions 214 may comprise a database, in which the data related to the cell, UEs and bearers can be stored to and fetched from.

As another example, the common framework platform functions 214 may comprise an xApp subscription management function, which manages the xApp requests for RIC subscriptions over the E2 interface, including merging of the subscriptions and united distribution of the data.

As another example, the common framework platform functions 214 may comprise a security function, which provides the security schemes of the xApps 211, 212, 213.

As another example, the common framework platform functions 214 may comprise a conflict mitigation function, which prevents and/or resolves the potential conflicts on the RAN control decisions made by multiple xApps 211, 212, 213.

As another example, the common framework platform functions 214 may comprise messaging infrastructure, which provides internal communication for the near-RT RIC 210.

As another example, the common framework platform functions 214 may comprise management services, which provide FCAPS management by tracing the transactions, logging information, and collecting metrics to capture, analyze and report the status of the near-RT RIC 210.

As another example, the common framework platform functions 214 may comprise an interface termination function, which terminates the connections, allows message exchange with the related O-RAN component, and additional functions depending on the needs of the specific interface termination.

As another example, the common framework platform functions 214 may comprise an application programming interface (API) management service, which supports the API registry, discovery, authentication, and event subscriptions.

An E2 interface is established between the near-RT RIC 210 and a given E2 node 201. Through the E2 interface, the E2 node 201 exposes the supported near-RT RIC services that it allows the xApps 211, 212, 213 to monitor and control. The near-RT RIC services may be mapped to logical RAN functions on the E2 node 201 and described according to E2 service models (E2SM). The xApps 211, 212, 213 may provide value-added services to the E2 node 201 for the negotiated services.

E2 interface functions may be divided into two categories: 1) near-RT RIC services comprising the REPORT, CONTROL, INSERT, POLICY and QUERY services, and 2) near-RT RIC support functions, which include interface management and service update procedures. The E2 interface functions may be realized through E2 application protocol (E2AP) procedures. RIC services may be carried by using subscription, indication, control and query E2AP procedures.

The REPORT service may be used by the near-RT RIC 210 to subscribe to receiving a REPORT indication message from the E2 node 201 upon triggering the event specified in near-RT RIC's subscription procedure. In other words, with the REPORT service, the E2 node 201 may be configured to report, to the near-RT RIC 210, information obtained during a specified trigger event. For example, the REPORT service may be used for handover announcement or for reporting measurement information.

The INSERT service may be used by the near-RT RIC 210 to subscribe to receiving an INSERT indication message from the E2 node 201 upon the specified event trigger. After the event occurrence, the E2 node 201 sends the related INSERT indication message and suspends the associated procedures until a CONTROL message from the near-RT RIC 210 is received, or until the waiting timer for the CONTROL message arrival expires. For example, the INSERT service may be used for exception handling.

The CONTROL service may be used by the near-RT RIC 210 via control procedure to initiate a new associated procedure, or to resume or cancel the suspended associated procedures in the E2 node 201. The CONTROL service may be used as a response to INSERT, or it may be used autonomously. For example, the CONTROL service may be used for automatic neighbor relation (ANR) neighbor update.

The POLICY service may be used by the near-RT RIC 210 to request the E2 node 201 to apply the POLICY after the occurrence of a specific event trigger. Unlike INSERT, POLICY is not dependent on the CONTROL message and does not suspend the associated procedures. In other words, with the POLICY service, the near-RT RIC 210 may configure the E2 node 201 to modify a response to a specified trigger event within a specified procedure according to a specific policy. For example, the POLICY service may be used for RAN optimization.

The QUERY service may be used by the near-RT RIC 210 to request information related to the E2 node 201 or to one or more UEs from the E2 node 201.

The near-RT RIC support functions provide functionalities and procedures regarding interface management and service update. The interface management functions facilitate E2 Setup, E2 Reset, E2 Node Configuration Update, and Near-RT RIC Service Update E2AP procedures.

Many applications in mobile networks require a large amount of data from multiple distributed sources, such as UEs or distributed gNBs, to be used to train a single machine learning model. To minimize the data exchange between the distributed units where the data is generated, and the centralized units where the common machine learning model is created, the concept of federated learning (FL) may be applied. In addition, FL can also help with keeping the data confidential.

FL is a form of machine learning (ML), where instead of model training at a single node, different versions of the model are trained at different distributed hosts. This is different from distributed machine learning, where a single ML model is trained at distributed nodes to use the computation power of different nodes. In other words, FL is different from distributed learning in the sense that: 1) each distributed node in a FL scenario has its own local training data, which may not come from the same distribution as the data at other nodes; 2) each node computes parameters for its local ML model; and 3) the central host does not compute a part of the model but combines parameters of all the distributed models to generate a global model. The objective of this approach is to keep the training dataset where it is generated, and to perform the model training locally at each individual learner in the federation.

After training a local model, each individual learner transfers its local model parameters, instead of the raw training dataset, to an aggregating unit (central host). The aggregating unit utilizes the local model parameters to update a global model which may eventually be fed back to the local learners for further iterations until the global model converges. As a result, each local learner benefits from the datasets of the other local learners through the global model, shared by the aggregating unit, without explicitly accessing high volumes of potentially privacy-sensitive data available at each of the other local learners.

In other words, the FL training process can be explained in the following main phases: initialization, client selection, reporting and aggregation, and termination.

In the initialization phase, a machine learning model (e.g., linear regression model, or artificial neural network) is chosen to be trained on local nodes, and the training process is initialized.

In the client selection phase, a subset of the local nodes is selected to start training on local data. The selected nodes acquire the current ML model, while the others wait for the next federated round.

In the reporting and aggregation phase, each selected local node sends its local model to the central host for aggregation. The central host aggregates the received local models and sends back the model updates to the local nodes. The local models and the aggregated model may be transmitted on regular communication links.

In the termination phase, once a pre-defined termination criterion is fulfilled (e.g., a maximum number of iterations is reached), the central host aggregates the updates and finalizes the global model.

RAN nodes (e.g., E2 nodes) comprise large amounts of useful data. In non-FL machine learning techniques, to train a global model, all the data from different RAN nodes would need to be collected in one location. The problem is that transferring all this data to a central point may require consumption of excessive resources (e.g., energy, storage, computational resources), which are not always available at a RAN node. To reduce the consumption of resources at RAN nodes, federated learning enables working on local data sets in the RAN nodes, and the near-RT RIC may act as the aggregator to provide the computational capacity needed for the federated learning operations.

Federated learning may be beneficial for numerous use cases, such as mobility optimization for reducing the ping-pong rate of handovers, interference management optimization, energy-saving-related cell switch-off optimization, UE-positioning-related sounding reference signal (SRS) configurations, and/or traffic steering. Herein traffic steering refers to the dynamic management and routing of data traffic across different networks and network layers to optimize performance, efficiency, and user experience.

However, given these use cases, if the federated learning aggregator resides outside the RAN nodes, there is currently no mechanism available to initiate the FL process.

Some example embodiments are described below using principles and terminology of 5G radio access technology without limiting the example embodiments to 5G radio access technology, however.

Some example embodiments provide a method to enable FL operation in O-RAN considering E2 nodes 201 as local FL clients, and the near-RT RIC 210 as the central FL server or aggregator. For example, some example embodiments may enable exposure of the FL capabilities of the E2 nodes 201 to the near-RT RIC 210. The E2 interface may be extended with new procedures and/or messages to support FL operation provisioning and FL operation execution.

In one embodiment, FL training may be supported such that the near-RT-RIC 210 is the FL aggregator, and one or more E2 nodes 201 act as FL clients. The near-RT RIC 210 may select the one or more E2 nodes 201 to act as the FL clients and then initiate the FL process. The local models and the global model may be exchanged between the near-RT RIC 210 and the E2 node(s) 201 via the E2 interface.

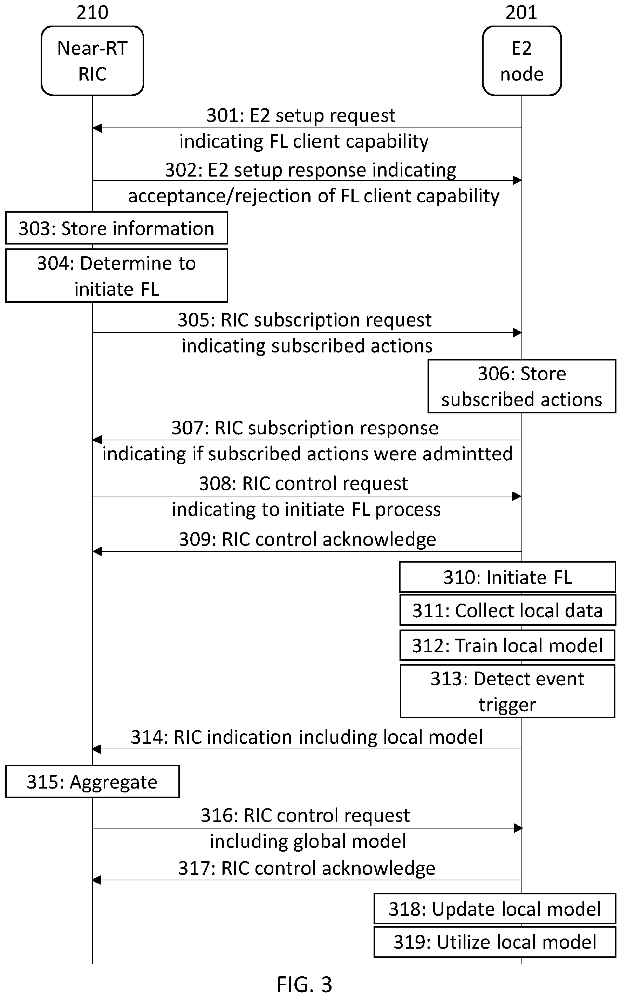

FIG. 3 illustrates a signal flow diagram according to an example embodiment. Although one E2 node 201 is shown in FIG. 3, it should be noted that the number of E2 nodes may also be different than one. In other words, there may be one or more E2 nodes. In addition, the signaling procedure illustrated in FIG. 3 may be extended and applied according to the actual number of E2 nodes.

Referring to FIG. 3, at 301, one or more E2 nodes 201 of a radio access network transmit, to a near-RT RIC 210 of the radio access network, an E2 setup request message indicating a capability of the one or more E2 nodes 201 for operating as a federated learning client in a federated learning process. In other words, each E2 node 201 may transmit an E2 setup request message indicating the capability of that particular E2 node for operating as an FL client. The near-RT RIC 210 receives the E2 setup request message(s).

The E2 setup request message is an E2AP message and part of the E2 setup procedure. For example, the E2 setup request message may comprise an identifier of the E2 node that transmitted the E2 setup request message, a list of supported RAN functions including the capability of operating as the federated learning client, and an E2 node configuration addition list.

A federated learning client refers to a decentralized device or server responsible for training and/or updating its local machine learning model based on its locally available data.

At 302, the near-RT RIC 210 transmits, to the one or more E2 nodes 201, an E2 setup response message indicating an acceptance or a rejection of the capability for operating as the federated learning client. In other words, with the E2 setup response message, the near-RT RIC 210 notifies the E2 node 201 about whether the FL client capability is accepted or rejected. In this case, the E2 setup response message may indicate an acceptance of the capability. The one or more E2 nodes 201 receive the E2 setup response message.

The E2 setup response message is part of the E2 setup procedure. For example, the E2 setup response message may comprise an identifier of the near-RT RIC 210, a list of the accepted or rejected RAN functions, and an E2 node configuration acknowledgement.

At 303, the near-RT RIC 210 stores information about the one or more E2 nodes 201, including the capability for operating as the FL client. The information may be stored in an internal memory of the near-RT RIC 210, or in an external memory.

At 304, the near-RT RIC 210 determines to initiate the federated learning process for the one or more E2 nodes 201 that indicated the capability for operating as the federated learning client (e.g., according to the information stored at 303). In other words, the near-RT RIC 210 decides to initiate FL across a set of E2 nodes that support the FL client role. The determination to initiate the federated learning process may be based on or triggered by identifying a need for minimizing or reducing data exchange between the one or more E2 nodes 201 and the near-RT RIC 210.

The near-RT RIC 210 may select all of the one or more E2 nodes 201 that indicated the FL client capability for participating in the federated learning process, or the near-RT RIC 210 may select any subset of the one or more E2 nodes 201 that fulfill the criteria for the federated learning.

At 305, the near-RT RIC 210 transmits, to the one or more E2 nodes 201 (which indicated the FL client capability), an RIC subscription request message for setting up at least a subscribed action for transmitting a local machine learning model from the one or more E2 nodes 201 upon finishing training of the local machine learning model at the one or more E2 nodes 201 during the federated learning process. The one or more E2 nodes 201 receive the RIC subscription request message.

The RIC subscription request is an E2AP procedure for creating a new subscription in an E2 node. The RIC subscription request message may comprise information on at least one event trigger that triggers the transmission of the local machine learning model from the one or more E2 nodes 201, wherein the at least one event trigger is related to finishing the training of the local machine learning model. For example, the at least one event trigger may define a time deadline for finishing the training of the local machine learning model, and the subscribed action may define that the E2 node should transmit its local machine learning model to the near-RT RIC 210 when this time deadline is met.

For example, the RIC subscription request message may include a RAN function identifier for the federated learning client, and RIC subscription details defining the type of the subscribed action as 'report', and the event trigger as `finish local training'. The 'report' may refer to the REPORT service described above.

At 306, the one or more E2 nodes 201 store the subscribed action and the event trigger for example in an internal memory.

At 307, the one or more E2 nodes 201 transmit, to the near-RT RIC 210, an RIC subscription response message indicating whether the subscribed action was admitted or not. In this case, the RIC subscription response message may indicate that the subscribed action was admitted.

The RIC subscription response message is an E2AP message. The RIC subscription response message may also comprise the RAN function identifier for the respective federated learning client. The near-RT RIC 210 receives the RIC subscription response message.

At 308, based on the determination of 304, the near-RT RIC 210 transmits, to the one or more E2 nodes 201 (which indicated the FL client capability), an RIC control request message comprising an indication to initiate the federated learning process. For example, the indication may include a new RIC control message. The one or more E2 nodes 201 receive the RIC control request message.

The RIC control request is an E2AP procedure. The RIC control request message may further comprise one or more training parameters for the federated learning process, and the RAN function identifier for the respective federated learning client.

For example, the one or more training parameters may comprise at least one of: a number of federated learning iterations, a total number of nodes used in the federated learning process, a portion of nodes used at each iteration for each node, and/or a local batch size used at each federated learning iteration.

At 309, the one or more E2 nodes 201 transmit, to the near-RT RIC 210, an RIC control acknowledge message to accept the initiation of the federated learning process. The RIC control acknowledge message is an E2AP message.

At 310, the one or more E2 nodes 201 initiate the federated learning process based on receiving the RIC control request message.

At 311, upon initiating the federated learning process, the one or more E2 nodes 201 collect local training data associated with a part of the radio access network. In other words, each E2 node 201 may collect local training data available to that individual E2 node. The local training data collected by one E2 node may be different to the local training data collected by another E2 node.

At 312, the one or more E2 nodes 201 train the local machine learning model according to the federated learning process based on the local training data. In other words, each E2 node 201 may train the local ML model based on the local training data collected by that individual E2 node.

The local machine learning model may be configured or trained for at least one of: mobility optimization, interference management optimization, energy saving optimization, traffic steering, or generating positioning-related sounding reference signal configurations for UEs.

For example, for training the local machine learning model for interference management optimization, the local training data may comprise at least one of: signal power and/or quality measurements, quality of service measurements (e.g., latency, packet loss rate, and/or data rate), traffic load data, interference from UEs and/or other E2 nodes or RAN nodes, historical performance metrics, and/or UE characteristics. This set of local training data may be used to train the ML model to recognize patterns that indicate potential interference and to learn strategies for optimizing resource allocation, antenna beamforming, power control, and other network parameters to mitigate interference. The goal is to improve the overall network performance and user experience.

As another example, for training the local machine learning model for mobility optimization, the local training data may comprise at least one of: handover metrics (e.g., handover success and failure rates), UE mobility patterns (e.g., speed and direction of UE movement, signal power and/or quality measurements, network load data, and/or quality of service measurements. This set of local training data enables the ML model to understand mobility patterns and make predictions to optimize handovers and network configurations. The goal is to enhance the user experience by reducing dropped calls, minimizing latency, and maintaining high data rates.

At 313, when the training of the local machine learning model is finished (completed), the one or more E2 nodes 201 detect the at least one event trigger (which was stored at 306) and prepare the local machine learning model for transmission.

At 314, the one or more E2 nodes 201 transmit, based on the detection, one or more local machine learning models to the near-RT RIC 210. In other words, each E2 node 201 transmits its local ML model to the near-RT RIC 210. For example, the local machine learning model may be transmitted in an RIC indication message, which may include an RIC request identifier corresponding to that of the RIC control request message of 308. The RIC indication message is an E2AP message. The near-RT RIC 210 receives the one or more local machine learning models from the one or more E2 nodes 201.

At 315, the near-RT RIC 210 aggregates the one or more local machine learning models into a global machine learning model associated with the radio access network.

The global machine learning model may be configured or trained for at least one of: mobility optimization, interference management optimization, energy saving optimization, traffic steering, or generating positioning-related sounding reference signal configurations for user equipments.

At 316, the near-RT RIC 210 transmits the global machine learning model (i.e., the aggregated model information) to the one or more E2 nodes 201. For example, the global machine learning model may be transmitted in an RIC control request message. The RIC control request message may further comprise the RIC request identifier, and the RAN function identifier for the respective federated learning client. The one or more E2 nodes 201 receive the global machine learning model.

At 317, the one or more E2 nodes 201 transmit, to the near-RT RIC 210, an RIC control acknowledge message to acknowledge the reception of the RIC control request message (including the global machine learning model).

For the sake of definition, the terms "E2 setup request message", "E2 setup response message", "RIC subscription request message", "RIC subscription response message", "RIC control request message", "RIC control acknowledge", and "RIC indication message" may be understood to be analogous to their definitions in the O-RAN specifications.

At 318, the one or more E2 nodes 201 may update the local machine learning model based on the global machine learning model. In other words, each E2 node 201 may update its own local ML model based on the global ML model.

It should be noted that 308, 309, 310, 311, 312, 313, 314, 315, 316, 317 and 318 may be performed iteratively in a loop until the global machine learning model has converged. In other words, the loop may be stopped once a pre-defined condition (e.g., a maximum number of iterations) has been reached.

At 319, the one or more E2 nodes 201 utilize the updated local machine learning model for ML inference. For example, the one or more E2 nodes 201 may utilize the updated local machine learning model for at least one of: mobility optimization, interference management optimization, energy saving optimization, traffic steering, or generating positioning-related sounding reference signal configurations for UEs.

Alternatively, the one or more E2 nodes 201 may utilize the global machine learning model for the ML inference. In other words, the global machine learning model can be used by the E2 node to either continue the local training, or for inference if the federated learning process is finished.

Regarding the interference management optimization, RAN nodes (FL clients) joining the FL operation may learn interference-related information together with time interval and area. The nodes may be reconfigured accordingly.

The mobility optimization may involve generation of analytics in the RAN (e.g., generating analytics related to radio link failures and ping-pong handovers or UE protocol data unit session pause) via a shared database.

Regarding the energy saving optimization, it is possible to use cell grouping to determine cells which have similar load characteristics (e.g., clustering or embedding could be used here).

Generating the positioning-related sounding reference signal configurations for UEs is related to configuring positioning SRS from the location management function (LMF) to RAN, and from RAN to UE. For example, the machine learning model may select one or more transmission-and-reception points (TRPs) for the purpose of locating the UE. This selection may be based on the UE mobility behaviour, tracking area, and/or RAN notification area, and for the purpose of fulfilling the positioning request with the required quality of service, or for locating an inactive UE with as minimal signaling as possible.

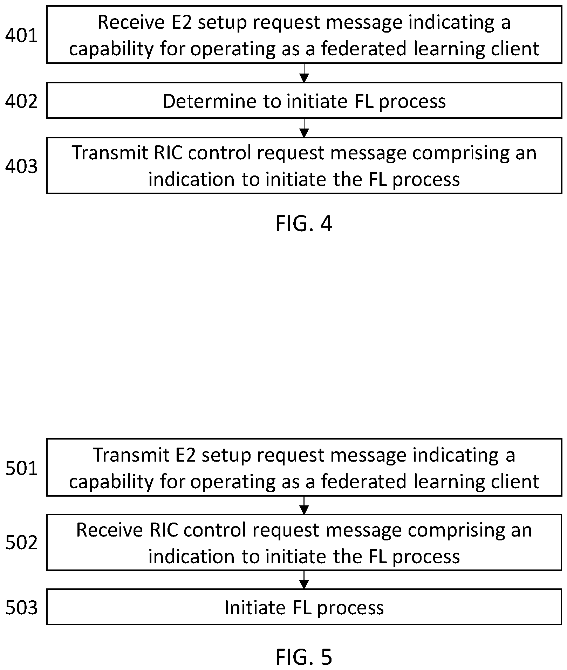

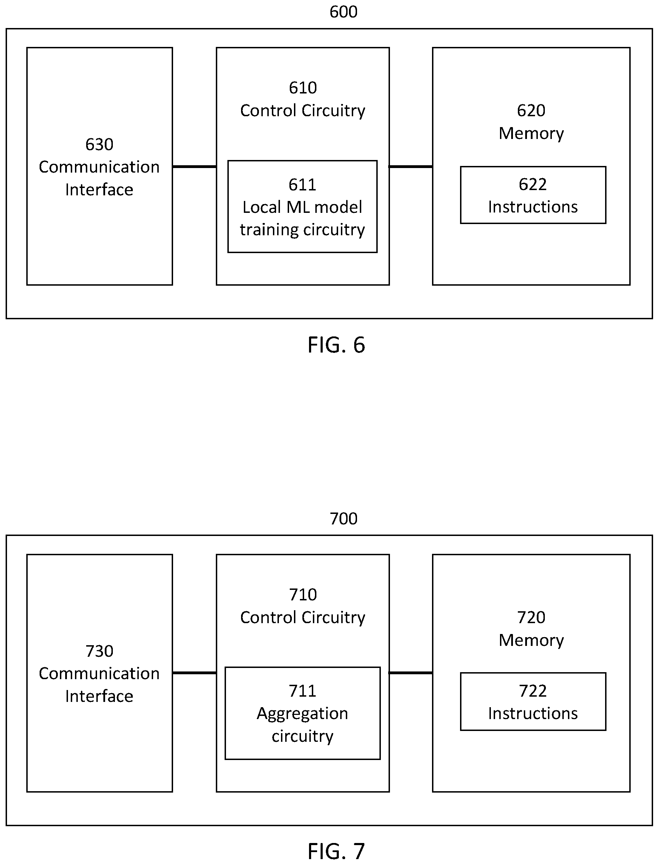

FIG. 4 illustrates a flow chart according to an example embodiment of a method performed by an apparatus 700 depicted in FIG. 7. For example, the apparatus 700 may be, or comprise, or be comprised in, a near-real-time radio access network intelligent controller (near-RT RIC) 210.

Referring to FIG. 4, in block 401, the apparatus 700 receives, from one or more E2 nodes 201 of a radio access network, an E2 setup request message indicating a capability of the one or more E2 nodes 201 for operating as a federated learning client in a federated learning process.

In block 402, the apparatus 700 determines to initiate the federated learning process for the one or more E2 nodes 201 that indicated the capability for operating as the federated learning client.

In block 403, the apparatus 700 transmits, to the one or more E2 nodes 201, an RIC control request message comprising an indication to initiate the federated learning process.

The apparatus 700 may transmit, to the one or more E2 nodes 201, an E2 setup response message indicating an acceptance or a rejection of the capability of the one or more E2 nodes for operating as the federated learning client.

The apparatus 700 may transmit, to the one or more E2 nodes 201, an RIC subscription request message for setting up at least a subscribed action for transmitting a local machine learning model upon finishing training of the local machine learning model during the federated learning process; and receive, from the one or more E2 nodes 201, an RIC subscription response message indicating whether the subscribed action was admitted.

The RIC subscription request message may comprise information on at least one event trigger that triggers the transmission of the local machine learning model from the one or more E2 nodes 201, wherein the at least one event trigger is related to finishing the training of the local machine learning model.

The apparatus 700 may receive one or more local machine learning models from the one or more E2 nodes 201, wherein the one or more local machine learning models were trained according to the federated learning process based on local training data collected at the one or more E2 nodes 201, the local training data being associated with a part of the radio access network.

The apparatus 700 may aggregate the one or more local machine learning models into a global machine learning model associated with the radio access network. The apparatus 700 may transmit the global machine learning model to the one or more E2 nodes 201.

The global machine learning model may be configured or trained for at least one of: mobility optimization, interference management optimization, energy saving optimization, traffic steering, or generating positioning-related sounding reference signal configurations for user equipments.

FIG. 5 illustrates a flow chart according to an example embodiment of a method performed by an apparatus 600 (depicted in FIG. 6) of an E2 node. For example, the apparatus 600 may be, or comprise, or be comprised in, an E2 node 201 of a radio access network.

Referring to FIG. 5, in block 501, the apparatus 600 transmits, to a near-real-time radio access network intelligent controller 210, an E2 setup request message indicating a capability of the apparatus 600 for operating as a federated learning client in a federated learning process.

In block 502, the apparatus 600 receives, from the near-real-time radio access network intelligent controller 210, an RIC control request message comprising an indication to initiate the federated learning process.

In block 503, the apparatus 600 initiates the federated learning process based on receiving the RIC control request message.

The apparatus 600 may receive, from the near-real-time radio access network intelligent controller 210, an E2 setup response message indicating an acceptance or a rejection of the capability for operating as the federated learning client.

The apparatus 600 may receive, from the near-real-time radio access network intelligent controller 210, an RIC subscription request message for setting up at least a subscribed action for transmitting a local machine learning model upon finishing training of the local machine learning model during the federated learning process. The apparatus 600 may store the subscribed action; and transmit, to the near-real-time radio access network intelligent controller 210, an RIC subscription response message indicating whether the subscribed action was admitted.

The RIC subscription request message may comprise information on at least one event trigger that triggers the transmission of the local machine learning model, wherein the at least one event trigger is related to finishing the training of the local machine learning model.

The apparatus 600 may collect local training data associated with a part of the radio access network; train the local machine learning model according to the federated learning process based on the local training data; detect the at least one event trigger; transmit, based on the detection, the local machine learning model to the near-real-time radio access network intelligent controller 210; and receive, from the near-real-time radio access network intelligent controller, a global machine learning model associated with the radio access network, wherein the global machine learning model comprises an aggregation of the transmitted local machine learning model and one or more other local machine learning models from one or more other E2 nodes of the radio access network.

The apparatus 600 may update the local machine learning model based on the global machine learning model.

The apparatus 600 utilize the global machine learning model or the updated local machine learning model for at least one of: mobility optimization, interference management optimization, energy saving optimization, traffic steering, or generating positioning-related sounding reference signal configurations for user equipments.

The blocks, related functions, and information exchanges (messages) described above by means of FIGS. 3 to 5 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 6 illustrates an example of an apparatus 600 comprising means for performing one or more of the example embodiments described above. For example, the apparatus 600 may be, or comprise, or be comprised in, an E2 node 201 of a radio access network.

The apparatus 600 may comprise, for example, a circuitry or a chipset applicable for realizing one or more of the example embodiments described above. The apparatus 600 may be an electronic device comprising one or more electronic circuitries. The apparatus 600 may comprise a communication control circuitry 610 such as at least one processor, and at least one memory 620 storing instructions 622 which, when executed by the at least one processor, cause the apparatus 600 to carry out one or more of the example embodiments described above. Such instructions 622 may, for example, include computer program code (software). The at least one processor and the at least one memory storing the instructions may provide the means for providing or causing the performance of any of the methods and/or blocks described above. For example, the control circuitry 610 may comprise a local machine learning model training circuitry 611 configured to train a local machine learning model based on local training data as described above with reference to any of FIGS. 3 or 5.

The processor is coupled to the memory 620. The processor is configured to read and write data to and from the memory 620. The memory 620 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 620 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 620 or, alternatively or additionally, they may be received, by the apparatus, via an electromagnetic carrier signal and/or may be copied from a physical entity such as a computer program product. Execution of the computer readable instructions causes the apparatus 600 to perform one or more of the functionalities described above.

The memory 620 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 600 may further comprise or be connected to a communication interface 630, such as a radio unit, comprising hardware and/or software for realizing communication connectivity with one or more wireless communication devices according to one or more communication protocols. The communication interface 630 comprises at least one transmitter (Tx) and at least one receiver (Rx) that may be integrated to the apparatus 600 or that the apparatus 600 may be connected to. The communication interface 630 may provide means for performing some of the blocks and/or functions (e.g., transmitting and receiving) for one or more example embodiments described above. The communication interface 630 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 630 provides the apparatus with radio communication capabilities to communicate in the wireless communication network. The communication interface may, for example, provide a radio interface to one or more UEs 100, 102. The apparatus 600 may further comprise or be connected to another interface towards a core network 110, such as the network coordinator apparatus or AMF, and/or to the access nodes 104 of the wireless communication network.

It is to be noted that the apparatus 600 may further comprise various components not illustrated in FIG. 6. The various components may be hardware components and/or software components.

FIG. 7 illustrates an example of an apparatus 700 comprising means for performing one or more of the example embodiments described above. For example, the apparatus 700 may be, or comprise, or be comprised in, a near-real-time radio access network intelligent controller (near-RT RIC) 210.

The apparatus 700 may comprise, for example, a circuitry or a chipset applicable for realizing one or more of the example embodiments described above. The apparatus 700 may be an electronic device or computing system comprising one or more electronic circuitries. The apparatus 700 may comprise a control circuitry 710 such as at least one processor, and at least one memory 720 storing instructions 722 which, when executed by the at least one processor, cause the apparatus 700 to carry out one or more of the example embodiments described above. Such instructions 722 may, for example, include computer program code (software). The at least one processor and the at least one memory storing the instructions may provide the means for providing or causing the performance of any of the methods and/or blocks described above. For example, the control circuitry 710 may comprise an aggregation circuitry 711 configured to aggregate one or more local machine learning models from one or more E2 nodes into a global machine learning model as described above with reference to any of FIGS. 3 or 4.

The processor is coupled to the memory 720. The processor is configured to read and write data to and from the memory 720. The memory 720 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 720 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 720 or, alternatively or additionally, they may be received, by the apparatus, via an electromagnetic carrier signal and/or may be copied from a physical entity such as a computer program product. Execution of the computer readable instructions causes the apparatus 700 to perform one or more of the functionalities described above.

The memory 720 may be implemented using any suitable data storage technology, such as semiconductor-based memory devices, flash memory, magnetic memory devices and systems, optical memory devices and systems, fixed memory and/or removable memory.

The apparatus 700 may further comprise or be connected to a communication interface 730 comprising hardware and/or software for realizing communication connectivity according to one or more communication protocols. The communication interface 730 may comprise at least one transmitter (Tx) and at least one receiver (Rx) that may be integrated to the apparatus 700 or that the apparatus 700 may be connected to. The communication interface 730 may provide means for performing some of the blocks and/or functions (e.g., transmitting and receiving) for one or more example embodiments described above. The communication interface 730 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 730 provides the apparatus 700 with communication capabilities to communicate in the wireless communication network. The communication interface 730 may, for example, provide a radio, cable or fiber interface to one or more E2 nodes 201 of a radio access network.

It is to be noted that the apparatus 700 may further comprise various components not illustrated in FIG. 7. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus (700) comprising at least one processor (710), and at least one memory (720)storing instructions (722) that, when executed by the at least one processor (710), cause the apparatus (700) at least to:
receive (401), from one or more E2 nodes (201) of a radio access network, an E2 setup request message indicating a capability of the one or more E2 nodes for operating as a federated learning client in a federated learning process;
determine (402) to initiate the federated learning process for the one or more E2 nodes (201) that indicated the capability for operating as the federated learning client; and
transmit (403), to the one or more E2 nodes (201), an RIC control request message comprising an indication to initiate the federated learning process.

2. The apparatus (700) according to claim 1, further being caused to:
transmit (302), to the one or more E2 nodes (201), an E2 setup response message indicating an acceptance or a rejection of the capability of the one or more E2 nodes (201) for operating as the federated learning client.

3. The apparatus (700) according to any preceding claim, further being caused to:
transmit, to the one or more E2 nodes (201), an RIC subscription request message for setting up at least a subscribed action for transmitting a local machine learning model upon finishing training of the local machine learning model during the federated learning process; and
receive, from the one or more E2 nodes (201), an RIC subscription response message indicating whether the subscribed action was admitted.

4. The apparatus (700) according to claim 3, wherein the RIC subscription request message comprises information on at least one event trigger that triggers the transmission of the local machine learning model from the one or more E2 nodes (201), wherein the at least one event trigger is related to finishing the training of the local machine learning model.

5. The apparatus (700) according to any preceding claim, further being caused to:
receive one or more local machine learning models from the one or more E2 nodes (201), wherein the one or more local machine learning models were trained according to the federated learning process based on local training data collected at the one or more E2 nodes (201), the local training data being associated with a part of the radio access network;
aggregate the one or more local machine learning models into a global machine learning model associated with the radio access network; and
transmit the global machine learning model to the one or more E2 nodes.

6. The apparatus (700) according to claim 5, wherein the global machine learning model is configured for at least one of: mobility optimization, interference management optimization, energy saving optimization, traffic steering, or generating positioning-related sounding reference signal configurations for user equipments.

7. The apparatus (700) according to any preceding claim, wherein the apparatus comprises, or is comprised in, a near-real-time radio access network intelligent controller.

8. An apparatus (600) of an E2 node (201), the apparatus (600) comprising at least one processor (610), and at least one memory (620) storing instructions that (622), when executed by the at least one processor (610), cause the apparatus (600) at least to:
transmit (501), to a near-real-time radio access network intelligent controller (210), an E2 setup request message indicating a capability for operating as a federated learning client in a federated learning process;
receive (502), from the near-real-time radio access network intelligent controller (210), an RIC control request message comprising an indication to initiate the federated learning process; and
initiate (503) the federated learning process based on receiving the RIC control request message.

9. The apparatus (600) according to claim 8, further being caused to:
receive, from the near-real-time radio access network intelligent controller (210), an E2 setup response message indicating an acceptance or a rejection of the capability for operating as the federated learning client.

10. The apparatus (600) according to any of claims 8 to 9, further being caused to:
receive, from the near-real-time radio access network intelligent controller (210), an RIC subscription request message for setting up at least a subscribed action for transmitting a local machine learning model upon finishing training of the local machine learning model during the federated learning process;
store the subscribed action; and
transmit, to the near-real-time radio access network intelligent controller (210), an RIC subscription response message indicating whether the subscribed action was admitted.

11. The apparatus (600) according to claim 10, wherein the RIC subscription request message comprises information on at least one event trigger that triggers the transmission of the local machine learning model, wherein the at least one event trigger is related to finishing the training of the local machine learning model,
wherein for example the apparatus (600) is further being caused to:
collect local training data associated with a part of a radio access network;
train the local machine learning model according to the federated learning process based on the local training data;
detect the at least one event trigger;
transmit, based on the detection, the local machine learning model to the near-real-time radio access network intelligent controller (210); and
receive, from the near-real-time radio access network intelligent controller (210), a global machine learning model associated with the radio access network, wherein the global machine learning model comprises an aggregation of the transmitted local machine learning model and one or more other local machine learning models from one or more other E2 nodes of the radio access network,
wherein for example the apparatus (600) is further being caused to:
update the local machine learning model based on the global machine learning model,
wherein for example the apparatus (600) is further being caused to:
utilize the global machine learning model or the updated local machine learning model for at least one of: mobility optimization, interference management optimization, energy saving optimization, traffic steering, or generating positioning-related sounding reference signal configurations for user equipments.

12. A method comprising:
receiving, from one or more E2 nodes (201) of a radio access network, an E2 setup request message indicating a capability of the one or more E2 nodes (201) for operating as a federated learning client in a federated learning process;
determining to initiate the federated learning process for the one or more E2 nodes (201) that indicated the capability for operating as the federated learning client; and
transmitting, to the one or more E2 nodes (201), an RIC control request message comprising an indication to initiate the federated learning process.

13. A method comprising:
transmitting, by an E2 node (201), to a near-real-time radio access network intelligent controller (210), an E2 setup request message indicating a capability for operating as a federated learning client in a federated learning process;
receiving, by the E2 node (201), from the near-real-time radio access network intelligent controller (210), an RIC control request message comprising an indication to initiate the federated learning process; and
initiating, by the E2 node (201), the federated learning process based on receiving the RIC control request message.

14. A non-transitory computer readable medium comprising program instructions which, when executed by an apparatus, cause the apparatus to perform at least the following:
receiving, from one or more E2 nodes (201) of a radio access network, an E2 setup request message indicating a capability of the one or more E2 nodes (201) for operating as a federated learning client in a federated learning process;
determining to initiate the federated learning process for the one or more E2 nodes (201) that indicated the capability for operating as the federated learning client; and
transmitting, to the one or more E2 nodes (201), an RIC control request message comprising an indication to initiate the federated learning process.

15. A non-transitory computer readable medium comprising program instructions which, when executed by an apparatus of an E2 node (201), cause the apparatus to perform at least the following:
transmitting (501), to a near-real-time radio access network intelligent controller (210), an E2 setup request message indicating a capability for operating as a federated learning client in a federated learning process;
receiving (502), from the near-real-time radio access network intelligent controller (210), an RIC control request message comprising an indication to initiate the federated learning process; and
initiating (503) the federated learning process based on receiving the RIC control request message.
